# EUROPÄISCHE PATENTSCHRIFT

(11) **EP 3 627 639 B1**
(45) Veröffentlichungstag und Bekanntmachung des Hinweises auf die Patenterteilung: **12.05.2021**
(21) Anmeldenummer: 18195455.3
(22) Anmeldetag: 19.09.2018
(51) Int. Cl.: H02B 1/052

(54) **SCHIEBEELEMENT FÜR EINEN EINHÄNGE- UND RASTMECHANISMUS**
SLIDING ELEMENT FOR A MOUNTING AND LATCHING MECHANISM
ÉLÉMENT COULISSANT POUR UN MÉCANISME DE SUSPENSION ET D'ENCLIQUETAGE

(43) Veröffentlichungstag der Anmeldung: 25.03.2020
(73) Patentinhaber: Siemens Aktiengesellschaft, 80333 München (DE)
(72) Erfinder: Petricek, Martin, 2020 Hollabrunn (AT)
(74) Vertreter: Maier, Daniel Oliver

(56) Entgegenhaltungen:
- EP-A1- 1 403 970
- EP-A1- 3 200 292

## Beschreibung

### Technisches Gebiet

Die vorliegende Erfindung betrifft Schiebeelement für einen Einhänge- und Rastmechanismus zum Befestigen eines Geräts, insbesondere eines elektrischen oder elektronischen Geräts, auf einer Schiene, wobei der Einhänge- und Rastmechanismus an einer Rückwand des Gerätes bzw. des Gerätegehäuses angebracht ist. Dabei umfasst der Einhänge- und Rastmechanismus zumindest eine obere unbewegliche Klaue und zumindest eine untere bewegliche Klaue, welche Bestandteil des Schiebeelements ist und gegenüber dem Gerät bzw. dem Gerätegehäuse translatorisch bewegbar ist.

### Stand der Technik

Geräte, insbesondere elektrische oder elektronische Geräte wie z.B. Schaltnetzteile, Sicherungsautomaten, Zeitschaltuhren, etc.) werden üblicherweise in Schaltschränken oder sonstigen Elektroinstallationseinrichtungen angebracht. Als Halterung für die diversen elektrischen oder elektronischen Geräte sind meist Schienen bzw. Tragschienen vorgesehen, auf welche die Geräte seitlich aufgeschoben oder von vorne aufgesteckt und arretiert werden können. Eine Montage der Geräte wird durch standardisierte Querschnittsmaße der Schienen vereinfacht. Die verschiedenen Schienentypen, welche auch als Normschienen bezeichnet werden, sind z.B. in der Norm DIN EN 60715 zusammengefasst genormt. Die standardisierten Maße der Schienen legen damit die Anschlussformen des Einhänge- und Rastmechanismus eines Gerätes fest, welche auf der jeweiligen Schiene montierbar sein soll.

Als Material für die Schienen wird z.B. Stahl, Kupfer oder Aluminium verwendet, wobei Schienen aus Kupfer oder Aluminium neben der tragenden Funktion auch als Schutzleiter verwendbar sind. Häufig sind die Schienen U-förmig beziehungsweise mit einem Hut ähnlichem Profil ausgeführt. Sie werden daher auch als Hutschienen bzw. im Englischen als DIN Rails bezeichnet.

In der Regel umfasst ein Einhänge- und Rastmechanismus zum Anbringen und Befestigen eines elektrischen oder elektronischen Gerätes an einer Tragschiene, insbesondere Hutschiene, eine unbewegliche Klaue und eine gegenüber dem Gerät bzw. dem Gerätegehäuse bewegliche Klaue, wobei als Klaue eine hakenförmige Ausbildung bezeichnet wird. Die bewegliche Klaue kann gegebenenfalls auch als Klinke ausgeführt sein, wobei Klinke einen kurzen, drehbar gelagerten Hebel bezeichnet. Die Rastung des Gerätes wird mittels der beweglichen Klaue bzw. mittels der Klinke bewerkstelligt. Bei der Montage eines Gerätes auf einer Trag- bzw. Hutschiene wird üblicherweise das Gerät mit der oberen, unbeweglichen Klaue an der Oberseite der Trag- bzw. Hutschiene eingehängt. Im Zuge einer Schwenkbewegung nach unten erfolgt in weiterer Folge die Rastung, wobei die bewegliche Klaue bzw. die Klinke an der Unterseite der Trag- bzw. Hutschiene einhakt bzw. diese hintergreift. Die bewegliche Klaue bzw. Klinke wird dabei gegen eine Federkraft nach unten gedrückt, bis die Endposition erreicht ist und die bewegliche Klaue bzw. Klinke infolge der Federkraft einschnappt. Die untere Schienenkante ist dabei so ausgeführt, dass die bewegliche Klaue beispielsweise mit dieser verhakt und das Gerät auf der Trag- bzw. Hutschiene fixiert.

Zum Abmontieren eines derartig auf einer Schiene befestigten Gerätes muss beispielsweise die bewegliche Klaue oder die Klinke entriegelt oder gelöst werden. Dies geschieht z.B. im einfachsten Fall durch Aushebeln mittels eines geeigneten Werkzeugs (z.B. Schraubendreher, etc.). Weist die bewegliche Klaue oder die Klinke beispielsweise einen aus dem Gerätegehäuse herausragenden Fortsatz auf, so kann ein Entriegeln z.B. durch einen Fingerdruck auf diesen Fortsatz erfolgen.

Aus der Schrift EP 2 510 597 B1 der Anmelderin ist ein Einhänge- und Rastmechanismus zum Befestigen von Geräten an einer Schiene bekannt, welcher eine unbewegliche und eine bewegliche Klaue umfasst, welche mittels einer verbindenden Federstruktur relativ zur unbeweglichen Klaue translatorisch bewegbar ist. Dabei sind die unbewegliche Klaue und die bewegliche Klaue mit der verbindenden Federstruktur einstückig - idealerweise als Kunststoffspritzgussteils - ausgeführt. Allerdings besteht bei diesem Einhänge- und Rastmechanismus vor allem bei schwereren Geräten bzw. bei Geräten, welchen stärkeren mechanischen Belastungen (z.B. Rüttelbewegungen während des Betriebs und/oder der Montage und/oder der Abmontage) ausgesetzt sind, die Gefahr, dass der Rastmechanismus beschädigt wird und damit eine sichere Fixierung des Geräts auf der Schiene nur mehr bedingt gegeben ist.

In der Schrift EP 2 582 000 B1 der Anmelderin wird ebenfalls ein Einhänge- und Rastmechanismus für Geräte zum Befestigen an einer Schiene schrieben, welcher in einen Geräterückwand integriert ist. Die untere Klaue ist dabei mittels Federstruktur relativ zum Gerät bzw. zur Geräterückwand translatorisch bewegbar. Für eine einfach und kostengünstige Herstellung die in der Schrift EP 2 582 000 B1 beschriebene Geräterückwand mit integriertem Einhänge- und Rastmechanismus als Kunststoffspitzgussteil ausgeführt. Dies hat den Nachteil, dass es vor allem bei schweren Geräten z.B. durch mechanische Belastung während des Betriebs (z.B. Rüttelbeanspruchung, etc.) und/oder dem Anbringen bzw. Abmontieren des Geräts von Schiene zu Beschädigungen des Einhänge- und Rastmechanismus und zu Stabilitätsproblemen kommen kann - d.h. der Rastmechanismus löst sich z.B. von selbst aufgrund des Gerätegewichts.

Daher kommen insbesondere bei schweren Geräten aus Stabilitätsgründen aus Metall ausgeführte Befestigungsteile zum Einsatz, welche z.B. bei Rüttelbeanspruchung auf die Befestigung vor allem die auf die Klauen wirkenden Kräfte aufnehmen können, ohne dass es zum selbsttätigen Lösen und/oder zur Beschädigung des Einhänge- und Rastmechanismus kommt. So kann beispielsweise die unbewegliche Klaue bereits in eine aus Metall ausgeführte Gehäuserückwand integriert sind. Die untere, bewegliche Klaue kann beispielsweise von einem aus Metall ausgeführten Schiebeelement umfasst werden. Dieses Schiebeelement kann für die translatorische Bewegung gegenüber der Geräterückwand beispielsweise eine Runddrahtfeder umfassen und beispielsweise mittels einer Buchse nach der Geräterückwand angebracht sein. Dieser relativ komplexe Aufbau des Schiebeelements bedingt allerdings eine zeitaufwendige und manuelle Fertigung (z.B. zum Anbringen der Runddrahtfeder) sowie eine zeitaufwendige und manuelle Montage an der Geräterückwand.

EP 3 200 292 A1 und EP 1 403 970 A1 offenbaren ferner Schieberelemente mit einem Langloch und einem Federelement.

### Darstellung der Erfindung

Der Erfindung liegt daher die Aufgabe zugrunde, ein Schiebeelement für einen Einhänge- und Rastmechanismus anzugeben, welches einen einfachen und für eine automatisierte Montage geeigneten Aufbau sowie eine robuste Ausführung in Bezug auf mechanische Belastungen ausweist.

Diese Aufgabe wird durch ein Schiebeelement der eingangs beschriebenen Art mit den Merkmalen des unabhängigen Anspruchs gelöst. Vorteilhafte Ausführungsformen der vorliegenden Erfindung sind in den abhängigen Ansprüchen beschrieben.

Erfindungsgemäß erfolgt die Lösung der Aufgabe durch ein Schiebeelement der eingangs beschriebenen Art für einen Einhänge- und Rastmechanismus zum Befestigen eines Geräts, insbesondere eines elektrischen Geräts, auf einer Schiene. Der Einhänge- und Rastmechanismus weist zumindest eine obere, unbewegliche Klaue und zumindest eine untere, bewegliche Klaue auf und ist an einer Geräterückwand bzw. Gehäuserückwand eines Gerätes angebracht. Dabei ist die zumindest einen bewegliche Klaue für die Rastung des Gerätes am Schiebeelement angebracht. Das Schiebeelement besteht dabei aus einem Verriegelungselement aus Metall und einem Federelement aus elastischem Material. Das Verriegelungselement, welches die zumindest eine bewegliche Klaue umfasst, weist zumindest ein Langloch auf. Das Federelement, welches eine translatorische Bewegung des Verriegelungselements gegenüber der Geräterückwand ermöglicht, ist derart in das Verriegelungselement formschlüssig eingepasst, dass eine in einem Steg des Federelements integrierte Bundbuchse zum Befestigen des Schiebeelements an der Geräterückwand in dem Langloch des Verriegelungselements zum Liegen kommt.

Der Hauptaspekt der erfindungsgemäß vorgeschlagenen Lösung besteht darin, dass das erfindungsgemäße Schiebeelement einen einfachen Aufbau aufweist, durch welchen eine automatisierte Montage - insbesondere ein automatisiertes Zusammenfügen von Verriegelungselement und Federelement - ermöglicht wird. Weiterhin kann das Schiebeelement durch die integrierte Bundbuchse sehr einfach auf der Geräterückseite angebracht werden, da die beiden Elemente formschlüssig eingepasst sind und die Bundbuchse für die Befestigung integriert ist. Komplizierte und zeitaufwendige manuelle Fertigungs- und Montageschritte zum Herstellung und Anbringen des Schiebeelements (wie z.B. Positionieren der Bundbuchse, etc.) entfallen damit.

Weiterhin führt die Materialkombination der Elemente des Schiebeelements vor allem bei schweren Geräten und/oder mechanischen Belastung (z.B. Rütteln) zu einer besseren Haltbarkeit und höheren Robustheit des Schiebeelements. Durch das in das Verriegelungselement eingepasste Federelement aus elastischem Material wird das Verriegelungselement in Position gehalten. Die mechanischen Belastungen wie z.B. Rütteln während des Betriebs bzw. beim Montieren und Abmontieren des Gerätes von der Schiene werden hingegen vom metallischen Verriegelungselement abgefangen. Das Federelement wird davon kaum belastet. Dadurch weist das Schiebeelement eine relativ robuste Ausführung im Bezug auf mechanische Belastungen auf und ist besonders zum Befestigen von schweren Geräten geeignet.

Es ist vorteilhaft, wenn das Verriegelungselement und das Federelement mittels einer lösbaren Schnappverbindung verbunden sind. Dadurch kann die Fertigung des Schiebeelements sehr einfach automatisiert und zeitsparend durchgeführt werden. Das Federelement wird z.B. einfach in das Verriegelungselement eingefügt, bis die Schnappverbindung formschlüssig einschnappt. Dazu kann das Federelement z.B. auf zwei parallelen Seitenkanten Fügeelemente aufweisen, welche in Auslässe des Verriegelungselements eingreifen und dort verhaken. Das Verriegelungselement und das Federelement sind dann miteinander verbunden und können gegebenenfalls wieder voneinander gelöst werden.

Weiterhin ist es günstig, wenn das Federelement weiterhin zwei parallel zu einer Bewegungsrichtung angeordnete Längsstege aufweist, zwischen welchen eine Federstruktur angeordnet ist. Durch die Längsstege wird einen Größe der Federstruktur definiert und eine Form des Federelements ermöglicht, dass ein formschlüssiges Einpassen in das Verriegelungselement ermöglicht.

In einer bevorzugten Ausführungsform des erfindungsgemäßen Schiebeelements ist die Federstruktur des Federelements aus meanderförmigen Federpaketen aufgebaut. Dabei ist zumindest ein meanderförmiges Federpaket jeweils zwischen dem Steg mit der integrierten Bundbuchse und einem der zwei Längsstege angeordnet. Eine derartige Struktur ist sehr einfach herzustellen. Durch eine Anzahl an beidseitig des Stegs mit der integrierten Bundbuchse kann z.B. eine Federkraft vorgegeben werden.

Alternativ kann die Federstruktur des Federelements aus lamellenförmigen Federpaketen aufgebaut sein. Die lamellenförmigen Federpakete sind dabei fischgeräten-artig beidseitige eines Zentralstegs bzw. zwischen dem Zentralsteg und jeweils einem der zwei Längsstege angeordnet. Die Federstruktur des Federelements ist dabei in einer Montagerichtung des Schiebeelements oberhalb des Stegs mit der integrierten Bundbuchse angeordnet. Der Steg mit der integrierten Bundbuchse ist dann beispielsweise als Quersteg bzw. normal zu den beiden Längsstegen ausgeführt, welche den Steg mit der integrierten Bundbuchse und die Federstruktur verbinden. Weiterhin kann der Zentralsteg beispielsweise auf einer dem Verriegelungselement zugewandten Seite eine Buchse bzw. einen Zapfen aufweisen, welche in einen entsprechend geformten Auslass im Verriegelungselement eingreift, um das Federelement zusätzlich im Verriegelungselement zu fixieren und dort eine Federkraft für die translatorische Bewegung des Verriegelungselements einzuleiten.

Idealerweise weist das Federelement auf einer der Geräterückwand zugewandten Seite eine Positionierungshilfe auf. Dadurch kann das Schiebeelement sehr einfach und rasch für eine Montage an der Geräterückwand richtig positioniert und dann sehr einfach automatisiert und/oder manuell befestigt werden.

Es ist weiterhin günstig, wenn das Federelement als einteiliger Kunststoffspritzgussteil aus einem thermoplastischen Kunststoff, insbesondere aus Polykarbonat, ausgeführt ist. Das Verriegelungselement ist idealerweise als einteiliger Blechteil, insbesondere aus Stahl- oder Edelstahlblech, ausgeführt, um die notwendige Festigkeit zum Aufnehmen mechanischer Belastungen (z.B. Gerätegewicht, Rütteln, etc.) aufzuweisen. Weiterhin kann das Verriegelungselement sehr einfach in der entsprechenden Form und Ausgestaltung durch entsprechende Bearbeitung (z.B. Stanzen, Biegen, etc.) aus einem Blech hergestellt werden.

Nach Einpassen des Federelements in das Verriegelungselement kann das Schiebeelement sehr einfach durch Einbringen eines Befestigungsmittels in die im Federelement integrierte Bundbuchse an der Geräterückwand angebracht werden. Als Befestigungsmittel kann z.B. eine Schraube oder eine Niete eingesetzt werden. D.h. das Schiebeelement wird durch die im Federelement integrierte Bundbuchse am Gerät befestigt. Die integrierte Bundbuchse verhindert dabei idealerweise ein Verklemmen zwischen dem Schiebeelement und der Geräterückwand bzw. ermöglicht ein translatorisches Bewegen des Schiebe- bzw. Verriegelungselements relativ zum Gerät bzw. zur Geräterückwand - vorgegeben durch die Federstruktur des Federelements, wobei ein Bewegungsspiel durch das Langloch im Verriegelungselement, in welchem die integrierte Bundbuchse zum Liegen kommt, vorgegeben wird.

### Kurzbeschreibung der Zeichnung

Die Erfindung wird nachfolgend in beispielhafter Weise anhand der beigefügten Figuren erläutert. Dabei zeigen:
- Figur 1: schematisch eine beispielhafte Ausführungsform des erfindungsgemäßen Schiebeelement mit getrennt dargestellten Verriegelungselement und Federelement in Schrägsicht
- Figur 2a: schematisch die beispielhafte Ausführungsform des Schiebeelement mit in das Verriegelungselement eingefügtem Federelement in Schrägsicht von einer im montierten Zustand einer Geräterückwand zugewandten Seite
- Figur 2b: schematisch die beispielhafte Ausführungsform des Schiebeelement mit in das Verriegelungselement eingefügtem Federelement in Schrägsicht von einer im montierten Zustand einer Geräterückwand abgewandten Seite
- Figur 3: schematisch eine weitere, beispielhafte Ausführungsform des Schiebeelements in Schrägsicht mit getrennt dargestellten Verriegelungselement und Federelement in Schrägsicht
- Figur 4: beispielhaft ein auf einer Hutschiene befestigtes Gerät mit einem das erfindungsgemäße Schiebeelement umfassenden Einhänge- und Rastmechanismus

### Ausführung der Erfindung

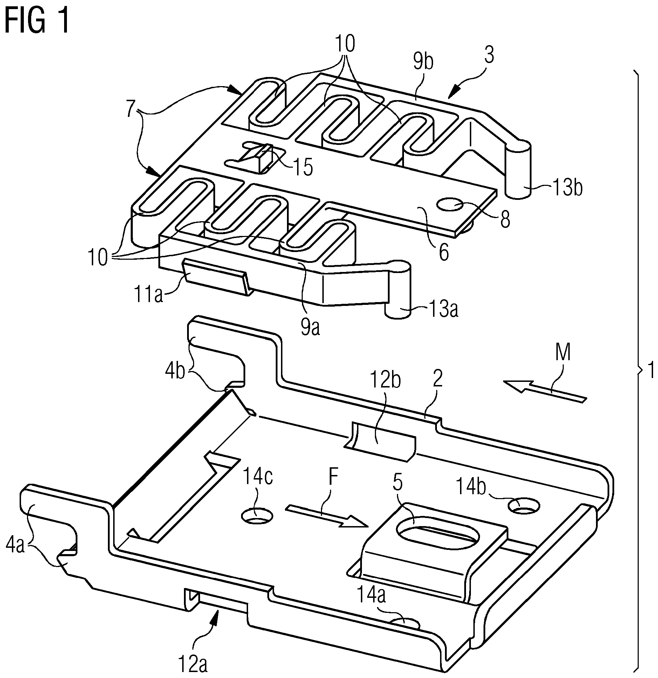

Figur 1 zeigt in schematischer Weise eine beispielhafte Ausführungsform des erfindungsgemäßen Schiebeelements 1 in einer Schrägansicht. Das Schiebeelement 1 besteht aus einem Verriegelungselement 2 und einem Federelement 3, welches in Figur 1 noch nicht in das Verriegelungselement 2 formschlüssig eingepasst ist. Das Verriegelungselement 2 kann beispielsweise als einteiliger Metallblechteil z.B. aus Stahl- oder Edelstahlblech ausgeführt sein. Das Federelement 3 ist beispielsweise als Kunststoffspritzgussteil aufgeführt, wobei als Kunststoff z.B. ein Polykarbonat wie z.B. PC Lexan™ 915R verwendet werden kann.

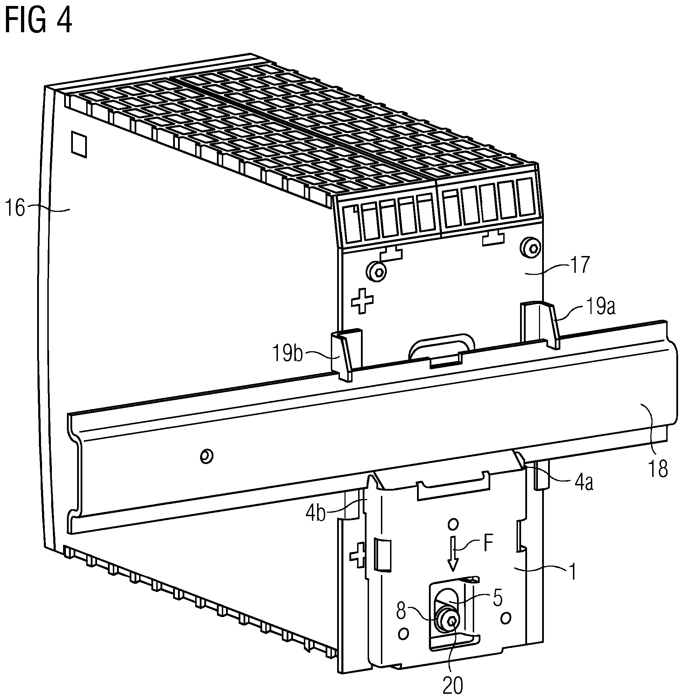

Das Verriegelungselement 2 umfasst z.B. zwei integrierte Klauen 4a, 4b auf, welche im montierten Zustand als untere, bewegliche Klauen 4a, 4b zum Einhaken in einer Hutschiene 18 bzw. zum Fixieren eines Geräts 16 auf der Hutschiene 18 dienen - wie in Figur 4 noch beschrieben wird. Die Klauen 4a, 4b weisen beispielsweise zum Fixieren des Geräts 16 einen Bereich auf, welcher im eingerasteten Zustand des Schiebeelements hinter eine untere Kante der Hutschiene 18 greift. Weiterhin weist das Verriegelungselement 2 ein Langloch 5 auf, welches z.B. auf einem gegenüber einer von einer Geräterückwand 17 abgewandten Oberfläche des Verriegelungselements abgesenkten Abschnitt des Verriegelungselements 2 angeordnet ist. Durch das Langloch - insbesondere durch einen Länge des Langlochs - wird eine maximal mögliche Länge sowie die Richtung F einer translatorischen Bewegung des Schiebeelements 1 bzw. des Verriegelungselements 2 gegenüber der Geräterückwand 17 im montierten Zustand vorgegeben.

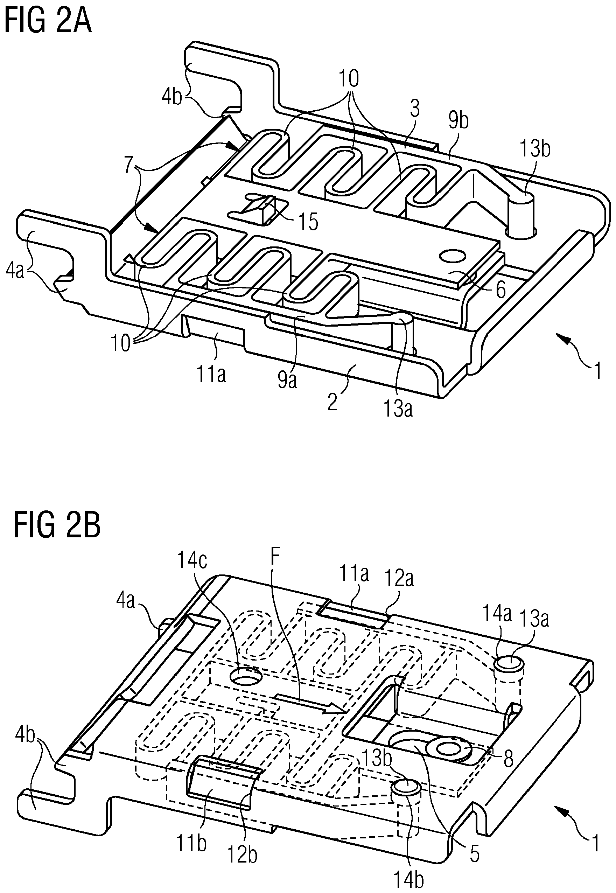

Das Schiebeelement 1 umfasst weiterhin das Federelement 3, welches einen Steg 6 und eine Federstruktur 7 aufweist. Im Steg 6 ist eine Bundbuchse 8 integriert, welche in einem formschlüssig eingepassten Zustand des Federelements 3 in das Verriegelungselement 2 im Langloch 5 des Verriegelungselements 2 bzw. im in Montagerichtung M unteren Ende des Langlochs 5 zum Liegen kommt - wie in den Figuren 2a und 2b dargestellt. Mittels der integrierten Bundbuchse 8 kann das Schiebeelement 1 an der Geräterückwand 17 durch Einbringen eines Befestigungsmittels 20 montiert werden.

Weiterhin weist das Federelement 3 zwei parallel zur Bewegungsrichtung F angeordnete Längsstege 9a, 9b auf, welche beiderseits des Stegs 6 angeordnet und über die Federstruktur 7 mit dem Steg 6 verbunden sind. Die Federstruktur 7 wird beispielsweise aus meanderförmigen - im einfachsten Fall - S-förmigen - Federpaketen 10 gebildet. Jedes Federpaket 10 besteht z.B. aus einem Steifen mit rechteckigem Querschnitt, welcher zwei gegenläufige Biegungen um die Querschnittsachse mit dem kleinsten Widerstandsmoment aufweist. An den Enden und zwischen den Biegungen sind im unbelasteten Zustand zueinander parallele Steifenabschnitte vorhanden.

Die Längsstege 9a, 9b, welche z.B. einen rechteckigen Querschnitt aufweisen, weisen an einer jeweiligen Außenkante jeweils zumindest ein Fügeelement 11a, 11b auf. Die Fügeelemente 11a, 11b können beim Einpassen des Federelements 3 in das Verriegelungselement 2 in entsprechende Auslässe 12a, 12b des Verriegelungselements 2 eingreifen und mit diesen Auslässen 12a, 12b beispielsweise eine lösbare Schnappverbindung bilden. Zusätzlich können die den in Montagerichtung M unteren Enden der Längsstege 9a, 9b als Positionierbuchsen oder - zapfen 13a, 13b ausgestaltet sein, welche in entsprechend geformte Auslässe 14a, 14b des Verriegelungselements 2 einpassbar sind. Das Verriegelungselement 2 kann z.B. zusätzliche Auslässe 14c für Positionier- und/oder Fixierelemente des Federelements 3 aufweisen. Weiterhin ist auf dem Steg 6 des Federelements 3 auf einer der Geräterückwand 17 zugewandten Seite des Federelements 3 eine Positionierungshilfe 15 angeordnet.

Die Figuren 2a und 2b zeigen beispielhaft das in Figur 1 dargestellte Schiebeelement 1 im zusammengefügten Zustand - d.h. das Federelement 3 ist in des Verriegelungselement 2 formschlüssig eingepasst. Dabei zeigt Figur 2a eine Seite des Schiebeelements 1, welche nach einer Montage der Geräterückwand 17 zugewandt ist. In Figur 2b ist eine Seite des Schiebeelements 1 dargestellt, welche nach einer Montage von der Geräterückwand 17 abgewandt ist - d.h. eine Außenseite des Schiebeelements 1 darstellt.

Aus den Figuren 2a und 2b ist ersichtlich, dass nach dem Einfügen des Federelements 3 in das Verriegelungselement 2 die Fügeelemente 11a, 11b, welche auf den Außenkanten der Längsstege 9a, 9b des Federelements 3 angeordnet sind, in die entsprechenden Auslässe 11a, 11b des Verriegelungselements eingreifen bzw. einschnappen und damit das Verriegelungselement 2 und das Federelement 3 verbinden. Die Längsstege 9a, 9b des Federelements 3 liegen - wie in Figur 2a dargestellt - dabei an einer jeweiligen Innenseite bzw. einer jeweiligen aufgebogenen Seitenkante des Verriegelungselements 2 an.

Weiterhin ist aus den Figuren 2a und 2b ersichtlich, dass die Positionierbuchsen bzw. -zapfen 13a, 13b in die entsprechend geformten Auslässe 14a, 14b eingepasst sind, um z.B. das Federelement 3 im Verriegelungselement 2 zu positionieren und gegebenenfalls zusätzlich zu fixieren. Figur 2b zeigt außerdem, dass im zusammengefügten Zustand des Schiebeelements 1 die integrierte Bundbuchse 8 des Federelements 3 in einem in Montagerichtung M unteren Ende des Langlochs 5 des Verriegelungselements 2 zum Liegen kommt. Die Bundbuchse 8 überragt dabei die Blechdicke des Verriegelungselements leicht und weist z.B. einen Außendurchmesser auf, welcher in das Langloch 5 bündig einfügbar ist. Die Länge des Langlochs 5 gibt dabei einen maximalen Bewegungsspielraum für die translatorische Bewegung des Verriegelungselements 2 im montierten Zustand in Bewegungsrichtung F vor.

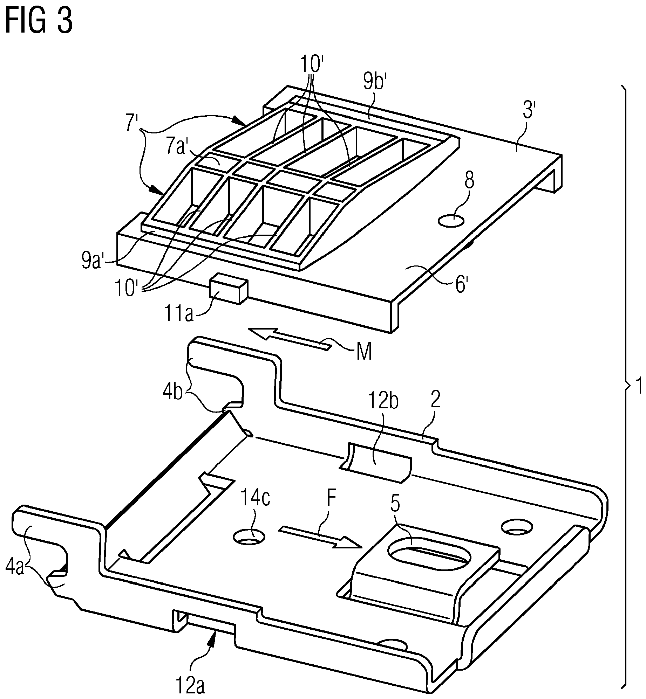

Figur 3 zeigt schematisch und beispielhaft eine weitere Ausführungsform des Schiebeelements 1, wobei das Verriegelungselement 2 dem in Figur 1 dargestellten Verriegelungselement 2 entspricht. Das Federelement 3', welches in einem nicht eingepassten Zustand dargestellt ist, weist allerdings einen alternative Ausführungsform auf. Das Federelement 3' umfasst einen Steg 6' und eine Federstruktur 7', wobei der Steg 6' als Quersteg ausgeführt ist und in einer Montagerichtung unterhalb der Federstruktur 7' angeordnet ist. Im Steg 6' ist die Bundbuchse 8 integriert, welche im formschlüssig eingepassten Zustand wieder im Langloch 5 des Verriegelungselements 2 zum Liegen kommt.

Das Federelement 3' weist zwei Längsstege 9a', 9b' auf, welche normal zum Steg 6' angeordnet sind und an ihren Außenkanten wieder Fügeelemente 11a, 11b zum Eingreifen in die entsprechenden Auslässe 12a, 12b des Verriegelungselements 2 aufweisen. Zwischen den zwei Längsstegen 9a', 9b' ist die Federstruktur 7' angeordnet, wobei die in Montagerichtung M oberen Enden der Längsstege 9a', 9b' mit der Federstruktur 7' verbunden sind. Die Längsstege 9a', 9b' verbinden damit den Steg 6' mit der integrierten Bundbuchse 8 auch mit der Federstruktur 7'.

Die Federstruktur 7' ist in der in Figur 3 beispielhaft dargestellten Ausführungsform aus fischgräten-artig angeordneten, lamellenförmigen Federpaketen 10' aufgebaut, wobei die Federpakete 10' beidseitig eines Zentralstegs 7a' angeordnet sind. Der Zentralsteg 7a' kann - auf einer dem Verriegelungselement 2 zugewandten Seite, welche in Figur 3 nicht sichtbar ist - eine Buchse bzw. einen Zapfen aufweisen, welcher nach dem Einfügen des Federelements 3' in einen entsprechend ausgebildeten Auslass 14c des Verriegelungselements 2 eingreift bzw. eingepasst ist, wobei der Auslass 14c z.B. als runde Bohrung ausgeführt sein kann. Über diese Buchse bzw. diesen Zapfen kann das Federelement 3' zusätzlich zur Schnappverbindung 11a, 11b; 12a, 12b im Verriegelungselement 2 fixiert werden und dort eine Federkraft in das Verriegelungselement 2 für die Bewegung in Bewegungsrichtung F eingeleitet werden.

Figur 4 zeigt beispielhaft einen Einhänge- und Rastmechanismus zum Befestigen eines Geräts 16 bzw. eines Gehäuses, in welchem ein Gerät 16, insbesondere ein elektrisches Gerät angeordnet ist, auf einer Schiene 18, insbesondere Hutschiene 18. Dieser Einhänge- und Rastmechanismus umfasst das erfindungsgemäße Schiebeelement 1, welches an einer Geräterückwand 17 des Geräts 1 angebracht ist. Dazu wird in die im Federelement 3, 3' integrierte Bundbuchse 8 ein Befestigungsmittel 20 (z.B. Schraube, Niete, etc.) eingebracht und am Gerät 16 bzw. an der Geräterückwand 17 befestigt. Zum Anbringen des Geräts 16 an der Schiene 18 sind weiterhin unbewegliche Klauen 19a, 19b an der Geräterückwand 17 angeordnet. Diese Klauen 19a, 19b können z.B. in die Geräterückwand 17 integriert sein. Mit diesen unbeweglichen Klauen wird das Gerät 16 an der oberen Kante der Schiene 18 eingehängt und dann im Zuge einer Schwenkbewegung nach unten in weiterer Folge die Rastung und Fixierung des Gerätes 16 mit Hilfe des erfindungsgemäßen Schiebeelement 1 durchgeführt. Dazu wird das Schiebeelement 1 bzw. das Verriegelungselement 2 des Schiebeelements 1 translatorisch in Bewegungsrichtung F gegen die Federkraft des Federelements 3, 3' bzw. der Federstruktur 7, 7' nach unten bewegt. Diese Bewegung wird durch die Kombination von Langloch 5 und Bundbuchse 8 ermöglicht und vorgegeben. Durch diese Bewegung werden am Verriegelungselement 2 angeordneten, beweglichen Klauen 4a, 4b ebenfalls nach unten bewegt, sodass die Schiene zwischen die Klauen 19a, 19b, 4a, 4b eingebracht werden kann. Nach Positionierung kann das Verriegelungselement 2 aufgrund der Federkraft des Federelements 3, 3' bzw. der Federstruktur 7, 7' wieder nach oben in eine Endposition bzw. in einen unbelasteten Zustand der Federstruktur 7, 7' schnappen, wobei die beweglichen Klauen 4a, 4b das Gerät 16 auf der Schiene 18 fixieren.

### Bezugszeichenliste

- 1: Schiebeelement
- 2: Verriegelungselement
- 3, 3': Federelement
- 4a, 4b: bewegliche Klauen
- 5: Langloch
- 6, 6': Steg des Federelements
- 7, 7': Federstruktur
- 7a': Zentralsteg
- 8: integrierte Bundbuchse
- 9a, 9b: Längsstege
- 9a', 9b': Längsstege
- 10, 10': Federpakete
- 11a, 11b: Fügeelemente
- 12a, 12b: Auslässe zum Eingreifen der Fügeelemente
- 13a, 13b: Positionierbuchsen/-zapfen für das Federelement
- 14a, 14b, 14c: Auslässe für Positionierbuchsen/-zapfen im Verriegelungselement
- 15: Positionierungshilfe
- 16: Geräte bzw. Gerätegehäuse
- 17: Geräterückwand
- 18: Hutschiene
- 19a, 19b: unbewegliche Klauen
- 20: Befestigungsmittel
- F: Bewegungsrichtung des Schiebeelements
- M: Montagerichtung des Schiebeelements

## Patentansprüche

1. Schiebeelement (1) für einen Einhänge- und Rastmechanismus zum Befestigen eines Geräts (16), insbesondere eines elektrischen Geräts, auf einer Schiene (18), wobei der Einhänge- und Rastmechanismus an einer Geräterückwand (17) angebracht ist und zumindest eine obere, unbewegliche Klaue (19a, 19b) und zumindest eine untere, bewegliche Klaue (4a, 4b) aufweist, wobei die zumindest eine bewegliche Klaue (4a, 4b) am Schiebeelement (1) angebracht ist, wobei das Schiebeelement (1) ein Verriegelungselement (2) aus Metall mit zumindest einer beweglichen Klaue (4a, 4b) umfasst, welches weiterhin zumindest ein Langloch (5) aufweist, und dass das Schiebeelement (1) weiterhin ein Federelement (3, 3') aus einem elastischen Material für eine translatorische Bewegung (F) des Verriegelungselements (2) gegenüber der Geräterückwand (17) umfasst, **dadurch gekennzeichnet, dass** das Federelement (3, 3') in das Verrieglungselement (2) derart formschlüssig eingepasst ist, dass eine in einem Steg (6, 6') des Federelements (3, 3') integrierte Bundbuchse (8) zum Befestigen des Schiebeelements (1) an der Geräterückwand (17) in dem Langloch (5) des Verriegelungselements (2) zum Liegen kommt.

2. Schiebeelement nach Anspruch 1, **dadurch gekennzeichnet, dass** das Verriegelungselement (2) und das Federelement (3, 3') mittels einer lösbaren Schnappverbindung (11a, 11b, 12a, 12b) verbunden sind.

3. Schiebeelement nach einem der Ansprüche 1 bis 2, **dadurch gekennzeichnet, dass** das Federelement (3, 3') weiterhin zwei parallel zu einer Bewegungsrichtung (F) des Schiebeelements angeordnete Längsstege (9a, 9b; 9a', 9b') aufweist, zwischen welchen eine Federstruktur (7, 7') angeordnet ist.

4. Schiebeelement nach Anspruch 3, **dadurch gekennzeichnet, dass** die Federstruktur (7) aus meanderförmigen Federpaketen (10) aufgebaut ist, wobei jeweils zumindest ein meanderförmiges Federpaket (10) zwischen dem Steg (6) mit der integrierten Bundbuchse (8) und einem der zwei Längsstege (9a, 9b) angeordnet ist.

5. Schiebeelement nach Anspruch 3, **dadurch gekennzeichnet, dass** die Federstruktur (7') aus lamellenförmigen Federpaketen (10') aufgebaut ist, wobei die lamellenförmigen Federpakete (10') beiderseits eines Zentralstegs (7a') angeordnet sind, und die Federstruktur (10') im Federelement (3') in einer Montagerichtung (M) des Schiebeelements (1) oberhalb des Stegs (6') mit der integrierten Bundbuchse (8) angeordnet ist.

6. Schiebeelement nach einem der vorangegangenen Ansprüche, **dadurch gekennzeichnet, dass** das Federelement (3, 3') auf einer der Geräterückwand (17) zugewandten Seite eine Positionierungshilfe (15) aufweist.

7. Schiebeelement nach einem der vorangegangenen Ansprüche, **dadurch gekennzeichnet, dass** das Federelement (3, 3') als einteiliger Kunststoffspritzgussteil aus einem thermoplastischen Kunststoff, insbesondere aus Polykarbonat, ausgeführt ist.

8. Schiebeelement nach einem der vorangegangenen Ansprüche, **dadurch gekennzeichnet, dass** das Verriegelungselement (2) als einteiliger Blechteil, insbesondere aus Edelstahlblech, ausgeführt ist.

9. Schiebeelement nach einem der vorangegangenen Ansprüche, **dadurch gekennzeichnet, dass** das Schiebeelement (1) durch Einbringen eines Befestigungsmittels (20), insbesondere einer Schraube oder einer Niete, in die im Federelement (3, 3') integrierte Bundbuchse (8) an der Geräterückwand (17) anbringbar ist.

## Claims

1. Sliding element (1) for a mounting and latching mechanism for securing a device (16), in particular an electric device, on a rail (18), wherein the mounting and latching mechanism is attached to a device rear wall (17) and has at least one upper, immobile catch (19a, 19b) and at least one lower, mobile catch (4a, 4b), wherein the at least one mobile catch (4a, 4b) is attached to the sliding element (1), wherein the sliding element (1) comprises a locking element (2) made from metal with at least one mobile catch (4a, 4b), which further has at least one elongated hole (5), and that the sliding element (1) further comprises a spring element (3, 3') made from an elastic material for a translational movement (F) of the locking element (2) relative to the device rear wall (17), **characterised in that** the spring element (3, 3') is fitted into the locking element (2) in a form-fit manner so that a flange bushing (8), integrated in a web (6, 6') of the spring element (3, 3'), for securing the sliding element (1) to the device rear wall (17) comes to rest in the elongated hole (5) of the locking element (2).

2. Sliding element according to claim 1, **characterised in that** the locking element (2) and the spring element (3, 3') are connected by means of a detachable snap-fit connection (11a, 11b, 12a, 12b).

3. Sliding element according to one of claims 1 to 2, **characterised in that** the spring element (3, 3') further has two longitudinal webs (9a, 9b; 9a', 9b') arranged parallel to a movement direction (F) of the sliding element, between which longitudinal webs (9a, 9b; 9a', 9b') a spring structure (7, 7') is arranged.

4. Sliding element according to claim 3, **characterised in that** the spring structure (7) is assembled from meander-shaped spring packs (10), wherein in each case at least one meander-shaped spring pack (10) is arranged between the web (6) with the integrated flange bushing (8) and one of the two longitudinal webs (9a, 9b).

5. Sliding element according to claim 3, **characterised in that** the spring structure (7') is assembled from lamellar spring packs (10'), wherein the lamellar spring packs (10') are arranged on both sides of a central web (7a') and in a mounting direction (M) of the sliding element (1), the spring structure (10') in the spring element (3') is arranged above the web (6') with the integrated flange bushing (8).

6. Sliding element according to one of the preceding claims, **characterised in that** the spring element (3, 3') has a positioning aid (15) on a side facing the device rear wall (17) .

7. Sliding element according to one of the preceding claims, **characterised in that** the spring element (3, 3') is embodied as a single-piece plastic injection moulded part made from a thermoplastic material, in particular from polycarbonate.

8. Sliding element according to one of the preceding claims, **characterised in that** the locking element (2) is embodied as a single-piece sheet metal part, in particular made from a stainless steel panel.

9. Sliding element according to one of the preceding claims, **characterised in that** the sliding element (1) can be attached to the device rear wall (17) by introducing a securing means (20), in particular a screw or a rivet, into the flange bushing (8) integrated in the spring element (3, 3').

## Revendications

1. Élément coulissant (1) pour un mécanisme d'accrochage et d'encliquetage pour fixer un appareil (16), en particulier un appareil électrique, sur un rail (18), dans lequel le mécanisme d'accrochage et d'encliquetage est monté sur une paroi arrière d'appareil (17) et comprend au moins une patte supérieure immobile (19a, 19b) et au moins une patte inférieure mobile (4a, 4b), dans lequel l'au moins une patte mobile (4a, 4b) est montée sur l'élément coulissant (1), dans lequel l'élément coulissant (1) comprend un élément de verrouillage (2) en métal comportant au moins une patte mobile (4a, 4b), qui comprend en outre au moins un trou oblong (5), et l'élément coulissant (1) comprend en outre un élément formant ressort (3, 3') constitué d'un matériau élastique pour un mouvement de translation (F) de l'élément de verrouillage (2) vis-à-vis de la paroi arrière d'appareil (17),
**caractérisé en ce que** l'élément formant ressort (3, 3') est ajusté par complémentarité de forme dans l'élément de verrouillage (2) de telle manière qu'une douille à collerette (8) intégrée dans une barrette (6, 6') de l'élément formant ressort (3, 3') pour fixer l'élément coulissant (1) sur la paroi arrière d'appareil (17) vient s'appuyer dans le trou oblong (5) de l'élément de verrouillage (2).

2. Élément coulissant selon la revendication 1, **caractérisé en ce que** l'élément de verrouillage (2) et l'élément formant ressort (3, 3') sont reliés au moyen d'une liaison à encliquetage détachable (11a, 11b, 12a, 12b).

3. Élément coulissant selon l'une des revendications 1 à 2, **caractérisé en ce que** l'élément formant ressort (3, 3') comprend en outre deux barrettes (9a, 9b, 9a', 9b') disposées parallèlement à une direction du mouvement (F) de l'élément coulissant, entre lesquelles une structure de ressort (7, 7') est disposée.

4. Élément coulissant selon la revendication 3, **caractérisé en ce que** la structure de ressort (7) est constituée de paquets de ressort (10) sinueux, dans lequel respectivement au moins un paquet de ressort (10) sinueux est disposé entre la barrette (6) comprenant la douille à collerette (8) intégrée et une des deux barrettes longitudinales (9a, 9b).

5. Élément coulissant selon la revendication 3, **caractérisé en ce que** la structure de ressort (7') est constituée de paquets de ressort (10') en forme de lamelles, dans lequel les paquets de ressort en forme de lamelles (10') sont disposés des deux côtés d'une barrette centrale (7a'), et la structure de ressort (10') est disposée dans l'élément formant ressort (3') dans une direction de montage (M) de l'élément coulissant (1) au-dessus de la barrette (6') comprenant la douille à collerette (8) intégrée.

6. Élément coulissant selon l'une des revendications précédentes, **caractérisé en ce que** l'élément formant ressort (3, 3') comprend un auxiliaire de positionnement (15) sur un côté tourné vers la paroi arrière d'appareil (17) .

7. Élément coulissant selon l'une des revendications précédentes, **caractérisé en ce que** l'élément formant ressort (3, 3') est réalisé sous forme d'une pièce moulée par injection de matière plastique monobloc constituée d'une matière plastique thermoplastique, en particulier d'un polycarbonate.

8. Elément coulissant selon l'une des revendications précédentes, **caractérisé en ce que** l'élément de verrouillage (2) est réalisé sous forme d'une pièce en tôle monobloc, en particulier en tôle d'acier inoxydable.

9. Elément coulissant selon l'une des revendications précédentes, **caractérisé en ce que** l'élément coulissant (1) peut être monté sur la paroi arrière d'appareil (17) en introduisant un moyen de fixation (20), en particulier une vis ou un rivet, dans la douille à collerette (8) intégrée dans l'élément formant ressort (3, 3').
